(19)

**Europäisches Patentamt**

**European Patent Office**

**Office européen des brevets**

(11) **EP 3 550 513 B1**

(12) **EUROPEAN PATENT SPECIFICATION**

(45) Date of publication and mention
of the grant of the patent:
**13.10.2021 Bulletin 2021/41**

(51) Int Cl.:
***G06T 7/55*** *(2017.01)*

(21) Application number: **19164909.4**

(22) Date of filing: **26.02.2014**

(54) **METHOD OF GENERATING PANORAMA VIEWS ON A MOBILE MAPPING SYSTEM**

VERFAHREN ZUR ERZEUGUNG VON PANORAMAANSICHTEN AUF EINEM MOBILEN
ABBILDUNGSSYSTEM

PROCÉDÉ DE GÉNÉRATION DE VUES PANORAMIQUES SUR UN SYSTÈME MOBILE DE
CARTOGRAPHIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.10.2019 Bulletin 2019/41**

(62) Document number(s) of the earlier application(s) in
accordance with Art. 76 EPC:
**14156863.4 / 2 913 796**

(73) Proprietor: **NavVis GmbH
80636 München (DE)**

(72) Inventor: **Reinshagen, Felix
80636 München (DE)**

(74) Representative: **Rummler, Felix
Maucher Jenkins
Liebigstrasse 39
80538 München (DE)**

(56) References cited:
**EP-A2- 2 045 133       WO-A1-2011/163454
US-A1- 2005 182 518     US-B1- 6 917 693**

* **KATSAGGELOS A K ET AL: "A Multicamera
Setup for Generating Stereo Panoramic Video",
IEEE TRANSACTIONS ON MULTIMEDIA, IEEE
SERVICE CENTER, PISCATAWAY, NJ, US, vol. 7,
no. 5, 1 October 2005 (2005-10-01) , pages
880-890, XP011139267, ISSN: 1520-9210, DOI:
10.1109/TMM.2005.854430**

**Description**

BACKGROUND

The ability to precisely and thoroughly map, measure and survey indoor environments is key for a variety of applications in industries like civil engineering, architecture, security, movie productions, asset management, and many more. Applications include specified/asbuilt comparisons with respect to the CAD data for newly built buildings. Changes with respect to the construction plan can be easily detected and corrected. Building information models can be generated based on the mapping data, which allows for an efficient planning and designing of modifications to that building. This could include the integration of a new pipe system at a factory site or the remodeling of office spaces.

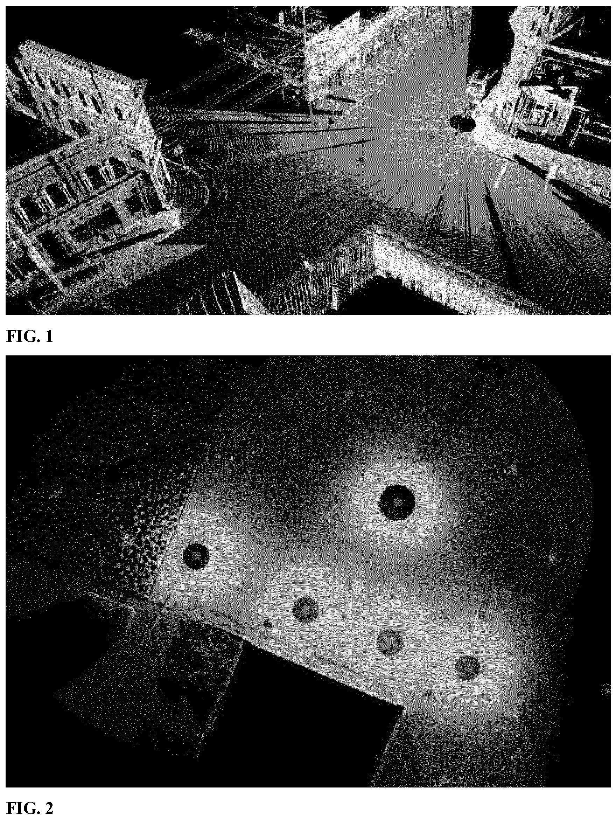

Leica Geosystems has mapped parts of an oil platform using their high-definition surveying scanners (HDS) to detect and measure deformations in the construction. The mapping was performed by using the Leica HDS6000 scanner, which precisely measures the distance and bearing of surrounding objects with respect to a single reference point. Due to the rotating scanner head, distance measurements are performed along 360 degrees in horizontal and vertical direction. These static scanners, however, can only provide distance measurements along the line of sight of a single scanning position. As shown in Figure 1 (copyright Leica Geosystems - HDS) that illustrates the distance measurements by the observed three-dimensional points (a so called point cloud), parts of a scene that are occluded by other objects cannot be measured by a single scan. Typically, multiple stationary scans are performed to resolve these occlusions as illustrated in Figure 2 (copyright http://www.laserscanningeurope.com/), which shows the top view of a point cloud generated by four stationary scans. The observed three-dimensional points of the individual scans are stitched to obtain a single point cloud. Nevertheless, even with multiple stationary scans, significant occlusions will still occur and it requires a complex planning of scanning locations to avoid these effects. These shadowing effects are especially severe in indoor environments with narrow hallways.

With a single stationary scan requiring minutes to hours to complete plus the required effort to subsequently combine the individual scans into a single point cloud, the generation of a complete point cloud of the interiors of a building is very time consuming.

In modern movie productions 3D models of recorded scenes are essential to integrate special visual effects. These models can be automatically generated based on detailed and complete mapping data of the scene. As in the previous example, multiple stationary scans are performed to fully map a scene without occlusions. Since the time and planning involved to obtain the point clouds is tremendous, this technique can only be applied in high budget productions.

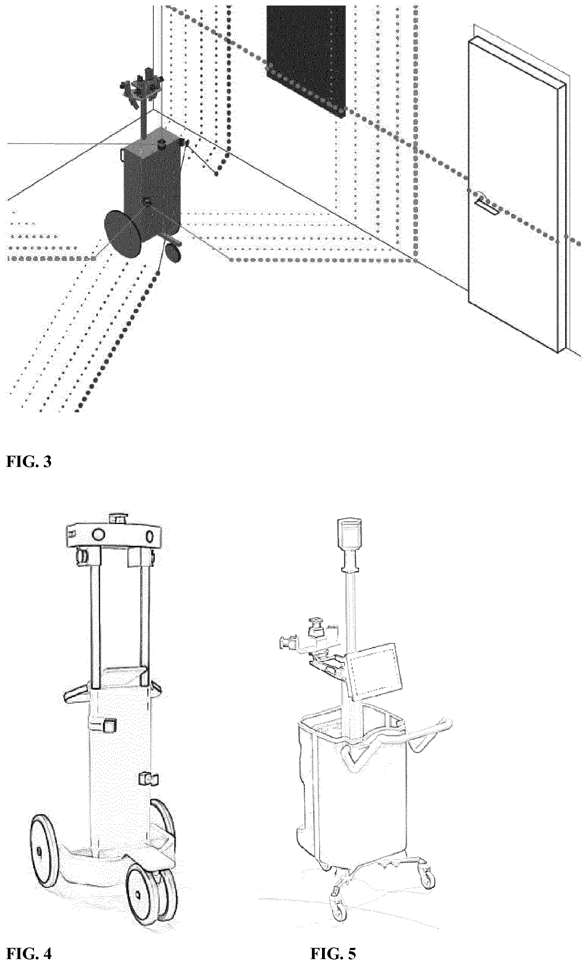

Due to these shortcomings of stationary distance and bearing scanners, a new class of mapping devices have recently emerged that are specifically designed to map indoor environments. These so called mobile mapping systems employ multiple (typically two) laser scanners that continuously scan their vicinity along multiple vertical planes as illustrated in Figure 3 by the green and blue dotted lines. While moving these mobile mapping systems along, e.g., a hallway, the individual planar scans are aggregated and merged to a single point cloud using information about the relative scanning positions. This information about the relative scanning positions can be obtained by using, e.g., a wheel odometry (GPS is hardly available indoors). A more precise position estimate can be obtained by an additional laser scanner that observes its environment along a horizontal plane (illustrated by the red dotted line in Figure 3). So called simultaneous localization and mapping (SLAM) algorithms allow for almost drift free positioning in large scale environments.

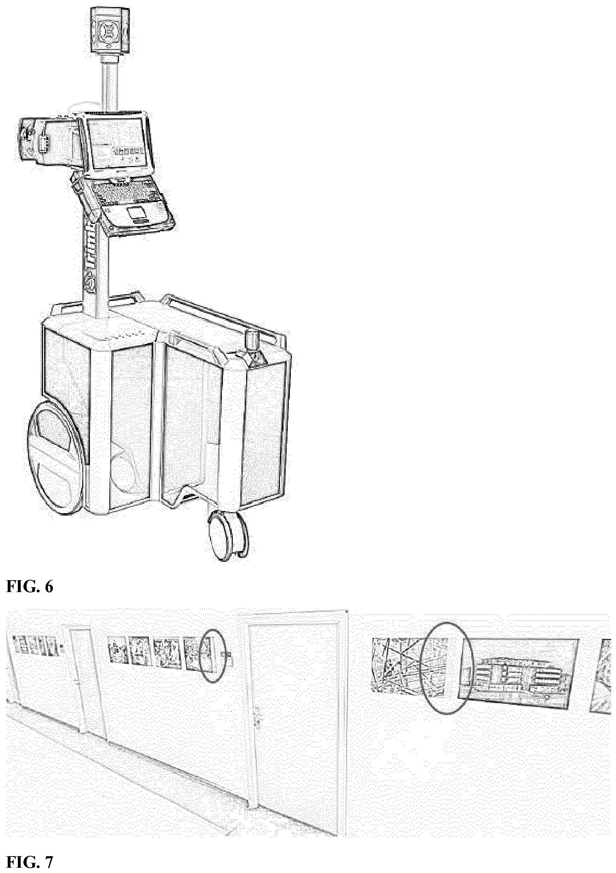

The advantage of these mobile mapping systems is the possibility of observing and mapping a scene while moving the system. Due to the resulting multiple viewpoints, occlusions can be avoided. Examples of these mobile mapping systems include the NavVis M3 Mapping Trolley (Figure 4), the Viametris IMMS (Figure 5, copyright Viametris), and the Trimble TIMMS (Figure 6, copyright Trimble). However, not only distance and bearing measurements are required in today's mapping applications. Additional visual information, typically in the form of panoramic images, is crucial to texturize 3D models in, e.g., movie productions, to allow for exact specified/asbuilt comparisons, to provide a more intuitive and detailed context in asset management, architecture, civil engineering, and many more applications like Google Streetview for indoors. 3D laser scanners like the above mentioned Leica HDS scanners already generate a colored point cloud, i.e., every distance and bearing scan also involves measuring the color and brightness of a 3D point, yet at low quality. The more advanced mobile mapping systems typically employ panoramic cameras that provide high resolution and high quality imagery. Both Trimble TIMMS as well as Viametris IMMS mapping systems employ a panoramic camera developed by Point Grey Inc. consisting of six wide angle (fisheye) cameras. The six images are superimposed according to their relative orientation to obtain a full 360 degree panorama. Further, the six cameras are mounted as close as possible to make sure the principal points of the cameras are as close as possible to each other. This is essential to avoid or reduce the parallax problem, which becomes visible when superimposing the images to a panorama as shown by the marked regions in Figure 7. In the shown panorama section the individual images are blended to reduce the visibility of these parallax artifacts.

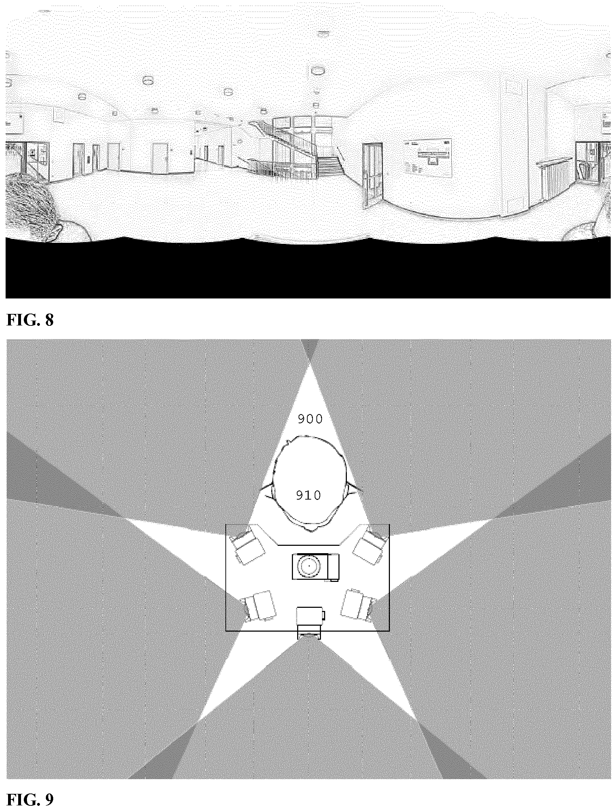

As the mobile mapping systems are typically operated by a person, it can be hardly avoided that parts of the operator are visible in the panoramic image. Due to the limitations of the overall height of the mapping system, the panoramic camera is typically mounted in a height of approximately 150 - 200 cm. Even when asking the operator to crouch every time images are taken, at least his/her head will be visible as shown in Figure 8. Clearly, crouching or even asking the operator to completely move out of the field of view of the mapping system drastically slows down the mapping process.

US 2005/182518 A1 describes a method in a visual simultaneous localization and mapping (VSLAM) system of updating a map. The method permits the measurements from a plurality of sensors to be combined or fused. The sensors correspond to sensors used by a mobile, device, such as a robot, for localization and/or mapping. The measurements are fused for estimation of a measurement, such as an estimation of a pose of a robot.

WO 2011/163454 A1 describes a method for image based positioning comprising capturing a first image with an image capturing device, wherein the first image includes at least one object, moving the platform and capturing a second image with the image capturing device, the second image including the at least one object, and processing the plurality of images of the object and its surface using a combined feature-based process and surface tracking process to track the location of the surface.

BRIEF DESCRIPTION OF THE DRAWINGS

Fig. 1 is an illustration of the distance measurements generated by a static 360-degree laser scanner (copyright Leica Geosystems - HDS). As shown, areas of the scene that are occluded by other objects cannot be measured from a single scanning position;

Fig. 2 illustrates a top view of a point cloud generated by four stationary laser scans;

Fig. 3 illustrates a typical assembly of three laser scanners on a mobile mapping system. The dotted lines correspond to the 3D point measurements performed by the laser scanners;

Fig. 4 is an illustration of a NavVis M3 Mobile Mapping System;

Fig. 5 is an illustration of a Viametris Mobile Mapping System;

Fig. 6 is an illustration of a Trimble Mobile Mapping System;

Fig. 7 is an illustration of an image of an indoor environment including two circled areas showing the parallax effect when superimposing images recorded from different positions to a panoramic view;

Fig. 8 is a panoramic view recorded by a standard panorama camera with the mobile mapping system including the operator in the field of view (shown on the bottom far left and right sides of the image);

Fig. 9 is an illustration of an assembly of six cameras to record panoramic images without the operator of the mobile mapping device being visible according to an exemplary preferred implementation of the present invention. The two cameras, which comprise fields of view (shown by the shaded grey areas) in the direction of the operator, are arranged to form a blind spot for accommodating the operator.

Fig. 10 is a three-dimensional illustration of the assembly of Fig. 9;

Fig. 11 is a top view of the three-dimensional illustration of Fig. 10;

Fig. 12 is a diagram illustrating the relationship of the reference images and the panoramic view in the image-based rendering process.

SUMMARY OF THE INVENTION

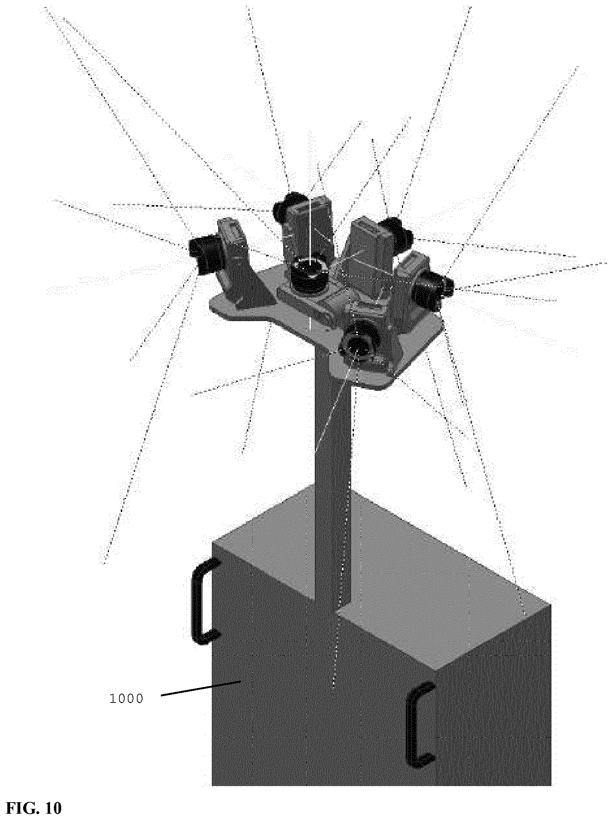

The present invention resides in a novel approach that enables continuous and accurate generation of complete 360-degree panoramic imagery without the operator being visible. To this end, a plurality of cameras are mounted in a close proximity to one another, wherein two of the plurality of cameras comprise fields of view in the direction of the operator of the mobile mapping device and are arranged to form a blind spot for accommodating the operator. This camera setup of an exemplary preferred implementation of the present invention is illustrated in Figures 9, 10, and 11 for a system consisting of six cameras.

By placing the two cameras facing in the direction of the operator far enough from one another, a blind spot big enough to accommodate the operator may be achieved. However, increasing the distance between the two cameras instead of mounting them as close as possible to each other stands in contrast to the endeavors of building a panoramic camera as compact as possible and results in an increase of the parallax error in the images. In fact, the parallax effect can also be removed when knowledge about the surrounding 3D geometry is available. Using so-called image based rendering approaches, the individual recorded images are projected onto the 3D geometry and back projected into the panoramic image sphere. The required information on the 3D geometry is actually available when combining this camera setup with our above described mapping system.

Firstly, as described above and illustrated in Figure 3, the attached laser scanners sample the surroundings to generate a 3D point cloud (explicit geometry). Second, information about the 3D geometry can be obtained via correspondences identified among the captured images (implicit geometry). These two techniques will be described in more detail in the context of the invention below.

By determining corresponding pixels among images recorded by the mobile mapping system, the depth of the pixels can be determined via triangulation. The identification of corresponding pixels, however, can be a difficult task in feature poor indoor environments like hospitals.

According to the present invention, panorama images of an environment are generated using a mobile mapping device comprising at least two cameras mounted in close proximity to one another on the device. Two of the cameras are facing the direction of the operator of the mobile mapping device and thus comprise fields of view in the direction of the operator. These two cameras and are arranged to form a blind spot for accommodating the operator. The images taken by each camera to form the panorama image may be taken simultaneously or consecutively. All images are preferably location-tagged and stored in a database. After the images of the environment have been generated by the cameras, they are processed using 3D geometry data associated with the environment to adjust parallax error in the images. By performing mobile mapping in this fashion, the present invention enables continuous and accurate generation of complete 360-degree panoramic imagery without the operator in the field of view.

In three preferred embodiments of the present invention, the environment being mapped by the mobile mapping device is an indoor environment, for example the inside of a building and/or the mobile mapping device is manually operated, for example is a movable trolley. According to these embodiments, the technique of mapping an environment with a manually operated mapping device is especially suited to the mapping of indoor environments.

In a further embodiment of the present invention which may optionally be combined with any of the aforementioned embodiments, the mobile mapping device specifically comprises more than two cameras and the blind spot is formed by arranging the two cameras comprising fields of view in the direction of the operator at a greater distance from one another than the other cameras of the plurality of cameras. By placing the two cameras facing in the direction of the operator far enough from one another, a blind spot big enough to accommodate the operator may be achieved. However, increasing the distance between the two cameras instead of mounting them as close as possible to each other stands in contrast to the endeavors of building a panoramic camera as compact as possible and results in an increase of the parallax error in the images. However, the parallax effect is removed when by use of the surrounding 3D geometry according to the present invention.

In a further embodiment of the invention that may optionally be combined with any of the aforementioned embodiments, the mobile mapping device comprises more than two cameras and the blind spot is formed by rotating the cameras to increase the distance between the point of overlap of the fields of view and the mapping device. By rotating either or both of the cameras facing the in the direction of the operator in opposite directions from one another i.e. in a direction away from the operator, the blind spot extends in a direction away from the vicinity of the mobile mapping device until the two respective fields of view intersect, thus providing more area to accommodate the operator if necessary. According to this embodiment, the need to space the two cameras facing in the direction of the operator further apart from one another may be obviated. This thereby reduces the level of parallax error in the panoramic image whilst also providing more space in the blind spot to hide the operator. However, it should be noted that a certain amount of image data in the area directly behind the operator that would otherwise be generated, may be lost due to this technique in comparison to spacing the two cameras further apart.

According to a further embodiment of the invention, that may also be optionally combined with any one of the above embodiments, the 3D geometry data used to is generated by determining corresponding pixels of the images generated by at least one of the cameras. This embodiment effectively applies the second implicit geometry approach as described above. Advantageously, it is the correspondences among any set of the generated images which enable data regarding the 3D geometry of the environment to be obtained in order to adjust the parallax error in the currently generated images. Due to the images taken by each camera used to generate the 3D geometry data having been taken simultaneously or consecutively, the 3D geometry data may be generated from the entire database of recorded images i.e. those images taken simultaneously by more than one camera and/or consecutively by at least one camera which may be the same or a different camera. Since all images are registered to one another dependent on location, the pixel correspondences between all the images in the database may conveniently be converted into 3D coordinates and points. The larger selection of images used to determine the pixel correspondences thereby improves the accuracy of the resulting 3D geometry data and hence improves the parallax error correction based thereupon.

According to yet another embodiment of the invention which may optionally be combined with any of the above embodiments, the 3D geometry data is generated by using at least one scanning means to scan the environment along multiple planes. This is effectively the first explicit geometry technique referred to above. The preferred embodiment uses a plurality of laser scanners as illustrated in Figure 3, which improves accuracy of the parallax error adjustment due to more 3D geometry data being available, and it effectively being real-time information. The multiple planes may include 360 degree horizontal and/or 360 degree vertical directions. However it should be noted that either a single, or multiple laser scanners may be used. The skilled person will also appreciated that equivalent scanning means exist such as Microsoft Kinect, light-field cameras, or time of flight cameras which also provide a suitable means for recording the 3D geometry of an environment directly.

According to a further preferred embodiment, the step of generating the panorama images is conducted continuously. This enables facilitated continuous generation of 360 degree panoramic imagery without the operator in the field of view, thereby advantageously reducing the amount of time needed to map a given environment.

EXAMPLE OF PREFERRED IMPLEMENTATION

In an example of a preferred implementation of the present invention, a mobile mapping device comprising any of the camera rigs mounted on the trolleys in Figures 3 to 6 is used to generate panorama images of the environment by wheeling the trolley down the corridors of a building. In this example, the trolley is equipped with multiple laser scanners and multiple cameras. It will be appreciated by the skilled person that the multiple cameras and laser scanners may be in the form of a rig or plurality of that rigs that is/are mountable on the trolley, but may also be provided as integral features of the trolley.

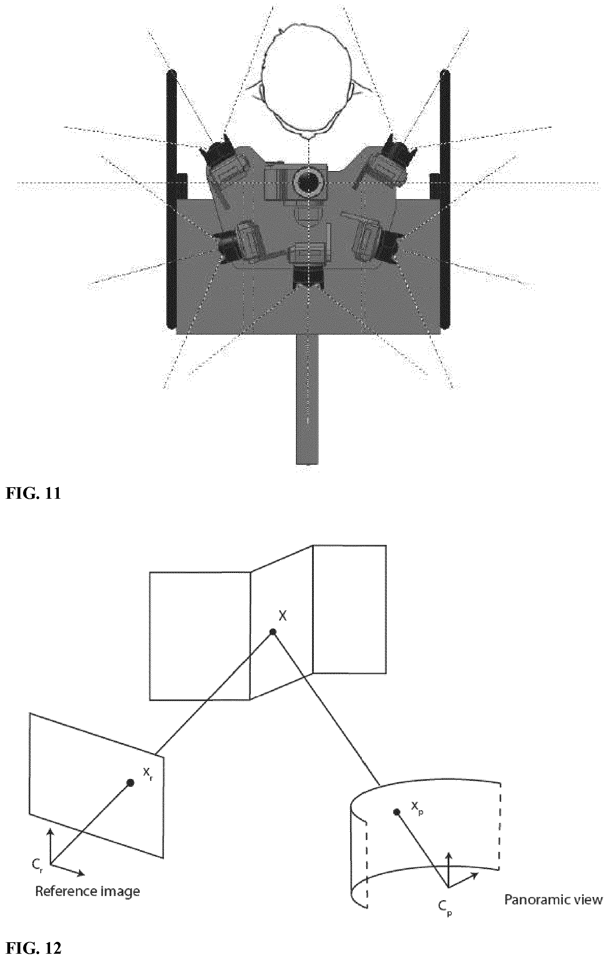

As the trolley is moved through the environment to be mapped, the cameras record images which may be used to form a 360-degree panoramic image, while the laser scanners record the horizontal and vertical dimensions of the corridor. At least two of the cameras mounted on the trolley are mounted in close proximity to one another on the device and face in the direction of the operator of the trolley. Thus, both of these cameras comprise fields of view in the direction of the operator. Through either spacing these two cameras further apart from one another, or rotating them in opposite directions from one another, the cameras are arranged to form a blind spot of sufficient area to hide the operator of the trolley as clearly illustrated in Figures 9 and 11.

The images taken by each camera to form the panorama image are taken either simultaneously or consecutively. After the images of the environment have been recorded by the cameras, they are processed using 3D geometry data associated with the environment to adjust parallax error in the images.

In the following a specific example for removing the parallax effect when knowledge about the 3D geometry is available in the form of 3D point clouds is provided in accordance with this preferred implementation of the present invention. This approach is also known as point-based rendering and is a natural choice for geometry acquisition methods like the ones employed on the mobile mapping system of the present invention, i.e., laser scanners, stereo reconstruction or structure from motion techniques. In point-based rendering, the images recorded by the cameras mounted on the mobile mapping systems are mapped onto the panoramic view using some form of geometry, e.g., depth map, 3D polygon mesh (explicit geometry) or correspondences between views.

In this example a 3D polygon mesh is employed, which can be viewed as an approximation of the real surface that has been sampled (3D points) by the laser scanners of the mobile mapping system. To obtain this approximation a polygon mesh is fitted into the 3D point cloud by minimizing the distance between the mesh and each recorded 3D point. This process is subject to a constraint that ensures that the mesh results in a smooth surface. Based on this polygon mesh-based representation of the 3D geometry captured by the laser scanners of the mobile mapping system, a relationship between the pixels in the reference views and the pixels in the panoramic view can now be defined. As a first step the ray for a pixel $x_p$ in the panoramic view is traced from the target view onto the 3D geometry, i.e., the polygon mesh, as illustrated in Figure 12. This depth computation can be processed very efficiently, for example, via rendering engines like OpenGL. The resulting 3D point $X$ is subsequently projected into the reference camera frames to determine the corresponding coordinates in the reference image $x_r$. The resulting mapping can be written as

$$X = C_p + \rho_p P_p^{-1}(x_p) \tag{1}$$

$$x_r = P_r(X - C_r) \tag{2}$$

wherein, $x_p$ and $x_r$ are coordinates of the projection of 3D point X on the panoramic view and reference images, respectively. C and P correspond to the camera center and projection function. $\rho_p$ is the length of the ray between the center of the panoramic view and the 3D point x, i.e., the depth. Thus, for every pixel $x_p$ in the panoramic view, the corresponding coordinates in the reference view(s) $x_r$ can be determined via this mapping. The coordinates $x_r$, however, are almost always at subpixel location. Hence, to assign the right intensity or color value to the pixel in the panoramic view and to avoid aliasing effects, the value is typically computed by a weighted average of the neighboring pixels at the coordinate $x_r$. Further, since the field of view of the cameras mounted on the mobile mapping system are overlapping each other, it can happen that the same 3D point is visible in two or more cameras. The most straightforward approach and preferred implementation in accordance with the present invention is to use the average value of the respective intensity or color values, but the skilled person with appreciate that more sophisticated approaches exist to blend the contributions of overlapping reference views and which may also be implemented with the present invention.

After processing every pixel in the panoramic view in the above-described exemplary manner, a full 360-degree panorama without parallax effect is obtained. Hence, in contrast to the endeavors of building panoramic cameras as compact as possible, the present invention follows the counterintuitive approach of increasing the distance between the fields of view of the two cameras facing in the direction of the operator, in order to hide the operator of the mobile mapping device in the blind spot formed thereby.

In summary, the invention enables facilitated continuous generation of 360-degree panoramic imagery without the operator in the field of view, thereby advantageously reducing the amount of time needed to map a given environment by exploiting the information about the surrounding 3D geometry.

**Claims**

1.  A method of generating panorama images of an environment using a manually operated mobile mapping device (1000) comprising at least two cameras mounted in close proximity to one another on the device; the method comprising:

    taking images with the cameras simultaneously or consecutively, wherein the cameras comprise fields of view forming a blind spot (900) for accommodating an operator (910) of the device;
    using a simultaneous localization and mapping (SLAM) algorithm to allow for positioning of the mobile mapping device in the environment;
    location-tagging and storing the images in a database;
    registering all images to one another dependent on a location;
    generating 3D geometry data by determining corresponding pixels of the images generated by at least one of the cameras; and
    using the 3D geometry data associated with the environment to adjust parallax errors in the panorama images.

2.  The method of claim 1, wherein the environment is an indoor environment.

3.  The method claims 1 or 2, wherein generating the panorama images comprises point-based rendering employing a 3D polygon mesh.

4.  The method of claim 3, further comprising using a constraint that ensures that the mesh results in a smooth surface.

5.  The method of any of the preceding claims, further comprising using blending contributions of overlapping images to adjust the errors in the panorama images.

6.  A manually operated mobile mapping device (1000) for generating panorama images of an environment, the device comprising at least two cameras mounted in close proximity to one another on the device, wherein the cameras comprise fields of view forming a blind spot (900) for accommodating an operator (910) of the device, and wherein the cameras are configured to take images simultaneously or consecutively, wherein the mobile mapping device is configured to:

    use a simultaneous localization and mapping (SLAM) algorithm to allow for positioning of the mobile mapping device in the environment;
    location-tag and store the images in a database;
    register all images to one another dependent on a location;
    generate 3D geometry data by determining corresponding pixels of the images generated by at least one of the cameras; and
    use the 3D geometry data associated with the environment to adjust parallax errors in the panorama images.

**Patentansprüche**

1.  Verfahren zum Erzeugen von Panoramabildern von einer Umgebung mithilfe einer manuell betätigten mobilen Abbildungsvorrichtung (1000) mit mindestens zwei Kameras, die nahe beieinander an der Vorrichtung befestigt sind, wobei das Verfahren Folgendes umfasst:

gleichzeitiges oder aufeinanderfolgendes Aufnehmen von Bildern mit den Kameras, wobei die Kameras Sichtfelder umfassen, die zwecks Berücksichtigung einer Bedienperson (910) für die Vorrichtung einen toten Winkel (900) bilden,

Benutzen eines Algorithmus für die gleichzeitige Lokalisierung und Kartierung (SLAM-Algorithmus) zum Ermöglichen eines Bestimmens der Position der mobilen Abbildungsvorrichtung in der Umgebung,

Verzeichnen des Standorts und Speichern der Bilder in einer Datenbank,

Registrieren aller Bilder miteinander in Abhängigkeit von einem Standort,

Erzeugen von 3D-Geometriedaten durch Bestimmen entsprechender Pixel der Bilder, die von mindestens einer der Kameras erzeugt werden, und

Benutzen der mit der Umgebung verknüpften 3D-Geometriedaten zum Korrigieren von Parallaxenfehlern in den Panoramabildern.

2. Verfahren nach Anspruch 1, wobei es sich bei der Umgebung um eine Innenumgebung handelt.

3. Verfahren nach Anspruch 1 oder 2, wobei das Erzeugen der Panoramabilder eine auf Punkten basierende Wiedergabe mithilfe eines 3D-Polygonnetzes umfasst.

4. Verfahren nach Anspruch 3, das ferner das Benutzen einer Einschränkung umfasst, die sicherstellt, dass durch das Netz eine glatte Fläche entsteht.

5. Verfahren nach einem der vorhergehenden Ansprüche, das ferner das Benutzen von Mischungsanteilen sich überlappender Bilder zum Korrigieren der Fehler in den Panoramabildern umfasst.

6. Manuell betätigte mobile Abbildungsvorrichtung (1000) zum Erzeugen von Panoramabildern von einer Umgebung, wobei die Vorrichtung mindestens zwei Kameras umfasst, die nahe beieinander an der Vorrichtung befestigt sind, wobei die Kameras Sichtfelder umfassen, die zwecks Berücksichtigung einer Bedienperson (910) für die Vorrichtung einen toten Winkel (900) bilden, und wobei die Kameras so konfiguriert sind, dass sie gleichzeitig oder nacheinander Bilder aufnehmen, wobei die mobile Abbildungsvorrichtung so konfiguriert ist, dass sie:

einen Algorithmus für die gleichzeitige Lokalisierung und Kartierung (SLAM-Algorithmus) zum Ermöglichen eines Bestimmens der Position der mobilen Abbildungsvorrichtung in der Umgebung benutzt,

den Standort verzeichnet und die Bilder in einer Datenbank speichert,

alle Bilder in Abhängigkeit von einem Standort miteinander registriert,

durch Bestimmen entsprechender Pixel der Bilder, die von mindestens einer der Kameras erzeugt werden, 3D-Geometriedaten erzeugt und

die mit der Umgebung verknüpften 3D-Geometriedaten zum Korrigieren von Parallaxenfehlern in den Panoramabildern benutzt.

## Revendications

1. Un procédé de génération d'images panoramiques d'un environnement au moyen d'un dispositif de cartographie mobile actionné manuellement (1000) comprenant au moins deux appareils de prise de vues montés à proximité étroite l'un de l'autre sur le dispositif, le procédé comprenant :

la prise d'images avec les appareils de prise de vues simultanément ou consécutivement, où les appareils de prise de vues comprennent des champs de vision formant un angle mort (900) destiné à l'accueil d'un opérateur (910) du dispositif,

l'utilisation d'un algorithme de cartographie et de localisation simultanées (SLAM) destiné à permettre le positionnement du dispositif de cartographie mobile dans l'environnement,

l'étiquetage de localisation et la conservation en mémoire des images dans une base de données,

l'enregistrement de la totalité des images les unes par rapport aux autres en fonction d'un emplacement,

la génération de données de géométrie 3D par la détermination de pixels correspondants des images générées par au moins un des appareils de prise de vues, et

l'utilisation des données de géométrie 3D associées à l'environnement de façon à ajuster des erreurs de parallaxe dans les images panoramiques.

2. Le procédé selon la Revendication 1, où l'environnement est un environnement intérieur.

**3.** Le procédé selon les Revendications 1 ou 2, où la génération des images panoramiques comprend un rendu à base de points employant un maillage polygonal 3D.

**4.** Le procédé selon la Revendication 3, comprenant en outre l'utilisation d'une contrainte qui garantit que le maillage résulte en une surface lisse.

**5.** Le procédé selon l'une quelconque des Revendications précédentes, comprenant en outre l'utilisation d'un mélange de contributions d'images en chevauchement de façon à ajuster les erreurs dans les images panoramiques.

**6.** Un dispositif de cartographie mobile actionné manuellement (1000) destiné à la génération d'images panoramiques d'un environnement,
le dispositif comprenant au moins deux appareils de prise de vues montés à proximité étroite l'un de l'autre sur le dispositif, où les appareils de prise de vues comprennent des champs de vision formant un angle mort (900) destiné à l'accueil d'un opérateur (910) du dispositif, et où les appareils de prise de vues sont configurés de façon à prendre des images simultanément ou consécutivement, où le dispositif de cartographie mobile est configuré de façon à :

utiliser un algorithme de cartographie et de localisation simultanées (SLAM) destiné à permettre le positionnement du dispositif de cartographie mobile dans l'environnement,
étiqueter la localisation et conserver en mémoire les images dans une base de données,
enregistrer la totalité des images les unes par rapport aux autres en fonction d'un emplacement,
générer des données de géométrie 3D par la détermination de pixels correspondant des images générées par au moins un des appareils de prise de vues, et
utiliser les données de géométrie 3D associées à l'environnement de façon à ajuster des erreurs de parallaxe dans les images panoramiques.

**FIG. 1**

**FIG. 2**

**FIG. 3**

**FIG. 4**

**FIG. 5**

**FIG. 6**

**FIG. 7**

**FIG. 8**

**FIG. 9**

FIG. 10

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005182518 A1
- WO 2011163454 A1